# EUROPÄISCHE PATENTSCHRIFT

(11) **EP 0 930 120 B1**
(45) Veröffentlichungstag und Bekanntmachung des Hinweises auf die Patenterteilung: **11.06.2003**
(21) Anmeldenummer: 98120716.0
(22) Anmeldetag: 31.10.1998
(51) Int. Cl.: B23D 47/02, B27B 5/06

(54) **Trennsäge mit einem verstellbaren Auflagetisch**
Sawing machine with adjustable workpiece table
Machine de sciage à table de support de la pièce ajustable

(30) Priorität: 15.01.1998 DE 19801183
(43) Veröffentlichungstag der Anmeldung: 21.07.1999
(73) Patentinhaber: HOLZMA Plattenaufteiltechnik GmbH, 75365 Calw-Holzbronn (DE)
(72) Erfinder: Heller, Heribert Dipl.-Ing., 72218 Wildberg (DE)
(74) Vertreter: Dreiss, Fuhlendorf, Steimle & Becker

(56) Entgegenhaltungen:
- DE-A- 2 330 476
- DE-A- 4 310 130
- DE-A- 19 639 255
- US-A- 2 175 907
- US-A- 5 412 863
- US-A- 5 651 298

## Beschreibung

Die Erfindung betrifft eine Trennsäge mit einem Auflagetisch, der an deren Maschinentisch anschließt, dessen Tischplatte eine Rechteckform aufweist und horizontal verschwenkbar, sowie wechselseitig mit zwei ihrer Seiten an den Maschinentisch anstellbar ist, wobei die Länge der Tischplatte wenigstens der Länge des maximal durchführbaren Trennschnittes entspricht, und die Tischplatte mit zwei benachbarten Eckbereichen an einander rechtwinklig zugeordneten, horizontalen Führungsvorrichtungen gleicher Länge geführt ist, von denen sich die eine parallel zur Trennebene erstreckt und die von den geführten Eckbereichen abgewandte Seite der Tischplatte durch eine Stütze bodenseitig abgestützt ist.

Solche Auflagetische bieten die Möglichkeit, bspw. eine Platte oder ein Plattenpaket nach Aufteilen durch die Trennsäge in Längsstreifen durch Verschwenken ihrer Tischplatte um 90° der Trennsäge wieder so zuführen zu können, daß sich die Längsstreifen anschließend in Querrichtung zur Herstellung ensprechender Kleinformate aufteilen lassen.

Die beiden, zum Verschwenken der Tischplatte vorgesehenen, sich zueinander senkrecht erstreckenden Führungsvorrichtungen solcher Auflagetische wie aus DE19639 255 A weisen hierbei jeweils die Hälfte der maximalen Schnittlänge der Trennsäge auf, und die entlang derselben geführten Eckbereiche der Tischplatte begrenzen deren eine, auf die halbe Schnittlänge dimensionerte Plattenschmalseite.

Diese Auslegung der Führungsvorrichtungen hat zur Folge, daß die Tischplatte mit ihrem, von den Führungsvorrichtungen abgekehrten, freien Plattenteilstück beim Verschwenken um 90° einen Bereich bestreicht, der näherungsweise einem Viertelkreisbogen enstpricht.

Das freie, von den Führungsvorrichtungen abgewandte Plattenteilstück der Tischplatte ist dabei von unten abzustützen, wozu an der Plattenunterseite ein Stützbein befestigt ist, das mittels einer Laufrolle entlang einer bodenfesten, bogeförmigen Laufbahn geführt ist. Letztere ist durch eine über die Bodenfläche aufragende Profilschiene gebildet, die sich über einen Bereich erstreckt, der bei einer Einstellung der Tischplatte hinter dem Maschinentisch zur Übernahme von Plattenlängsstreifen bis weit hinter die Tischplatte hinaus reicht.

Die erhabene Profilschiene bildet somit ein Hindernis für Werkstattfahrzeuge und eine Unfallgefahr für das Personal; ganz abgesehen davon, daß zur Führung des Stützbeines ein auf der Profilschiene geführter, technisch aufwendiger Rollenschemel notwendig ist und für die Plattenabstützung sowie für deren Schwenkbereich hinter dem Auflagetisch beträchtlicher, nicht weiter nutzbarer Raum benötigt wird.

Die erläuterte Schwenkbewegung der Tischplatte zum Bereitstellen von Plattenlängsstreifen für deren Queraufteilung führt auch dazu, daß die Bedienperson, die beim Längsaufteilen ihre Arbeitsposition hinter der von der Trennsäge abgewandten Längsseite der Tischplatte einnimmt, diesen Standort für das Verschwenken der Tischplatte verlassen muß.

In der verschwenkten Tischposition erstreckt sich dann die zuvor von der Trennsäge abgewandte Längsseite der Tischplatte parallel zu einem üblicherweise vorgesehenen, sich senkrecht zur Trennebene erstreckenden Winkelanschlag.

Da die auf der Tischplatte aufliegenden Plattenlängsstreifen beim Plattenaufteilen in der Regel nicht bis zur hinteren Plattenlängskante geschoben werden, müssen diese nach erfolgter 90°-Schwenkbewegung der Tischplatte manuell an den Winkelanschlag angelegt werden, wozu sich die Bedienperson dann hinter diesem Anschlag aufstellen muß. Das manuelle Ausrichten von Streifenpaketen ist dabei, insbesondere wenn es sich um groß dimensionierte Formate handelt, anstrengend und zeitraubend.

Hier setzt nun die Erfindung ein. Es liegt ihr die Aufgabe zugrunde, einen Auflagetisch für eine Trennsäge in einer Ausbildung gemäß dem Oberbegriff des Anspruches 1 so weiterzubilden, daß sowohl auf bodenseitig zu verlegende Tischplatten-Führungsmittel verzichtet werden kann, als auch für das Verschwenken der Tischplatte um 90° hinter der Trennsäge erheblich weniger Raum benötigt wird.

Diese Aufgabe wird erfindungsgemäß dadurch gelöst, daß die Tischplatte mit zwei ihre Länge begrenzenden Eckbereichen an den Führungsvorrichtungen geführt ist, deren Länge jeweils im wesentlichen der maximalen Schnittlänge der Trennsäge entspricht und daß die Stütze im Bereich der Quermittenebene der Tischplatte und im Abstand von der parallel zur Trennebene verlaufenden Führungsvorrichtung vorgesehen ist.

Bei einer Einstellung der Tischplatte hinter der Trennsäge zur Übernahme von Plattenlängsstreifen befinden sich beide, ihre der Trennsäge benachbarte Längsseite begrenzenden Platteneckbereiche unmittelbar neben dem Maschinentisch. Für einen Positionswechsel der Tischplatte um 90° zur Bereitstellung der Plattenlängsstreifen zum Queraufteilen ist dann der eine Platteneckbereich entlang der sich senkrecht zur Trennebene erstreckenden Führungsvorrichtung zu verlagern, wobei sich der andere Platteneckbereich parallel zur Trennebene in Richtung auf diese Führungsvorrichtung hinbewegt.

Aus der Abfolge dieser Bewegungen der beiden Platteneckbereiche für ein Verschwenken der Tischplatte um 90° ergibt sich, daß diese im Vergleich zur bekannten Konstruktion einen wesentlich geringeren Flächenbereich bestreicht, in dem das freie Plattenendstück keine nach außen gerichtete Schwenkbewegung mehr auszuführen hat, so daß die Bedienperson ihre Arbeitsposition hinter der Trennsäge bzw. hinter dem Auflagetisch im wesentlichen beibehalten kann. Dabei ergibt sich aufgrund der speziellen, räumlichen Verlagerung der Tischplatte der Vorteil, daß nunmehr deren Abstützung durch eine im Bereich der Plattenquermittenebene vorzusehende Stütze erfolgen und somit auch auf spezielle, bodenseitige Stützen-Führungsmittel vollkommen verzichtet werden kann.

Ein weiterer, wesentlicher Vorteil der Erfindung besteht darin, daß die Längsseite der Tischplatte, die bei der Übernahme von Plattenlängsstreifen dem Maschinentisch der Trennsäge benachbart ist, nach erfolgter 90°-Drehung sich in Parallellage zu der sich senkrecht zur Trennebene erstreckenden Führungsvorrichtung der Tischplatte befindet. Nach dem Längsaufteilen von Plattenmaterial befindet sich deshalb der letzte Plattenlängsstreifen im Bereich dieser Längsseite der Tischplatte. Demzufolge liegt dieser nach erfolgter 90°-Verlagerung der Tischplatte auch unmittelbar neben dem Winkelanschlag, so daß das Plattenmaterial allenfalls noch geringfügig in Richtung auf diesen zu verschieben ist.

Vorteilhafte Ausgestaltungen der Erfindung sind Gegenstand von Unteransprüchen.

Die Stütze der Tischplatte kann auf dem Boden fest installiert sein. In diesem Falle ruht die Tischplatte auf der Stütze auf und wird beim Verschwenken um 90° auf der Stütze entsprechend verschoben. Günstigerweise wird man deshalb auf der Stütze und/oder an der Plattenunterseite eine vorzugsweise mit einem Gleitmaterial, wie z.B. Teflon, beschichtete Gleitfläche vorsehen.

Alternativ hierzu kann jedoch auch eine Anordnung verwirklicht sein, bei der die Stütze an der Unterseite der Tischplatte befestigt ist. In diesem Falle ist es zweckmäßig, auf dem Boden ebenerdig eine geeignete Lauffläche zur Abstützung der mit einer Stützrolle ausgestatteten, tischfesten Stütze vorzusehen, die flächenmäßig entsprechend klein ausgelegt sein kann.

Bevorzugt wird man hierbei als Stützrolle eine im unteren Stützenende gelagerte Allseitrolle vorsehen.

In weiterer Ausgestaltung der Erfindung kann sich der senkrecht und horizontal zur Trennebene vorgesehenen Führungsvorrichtung ein sich zu dieser parallel erstreckender Winkelanschlag zugeordnet sein, um längs aufgeteiltes Plattenmaterial für das Queraufteilen exakt ausrichten zu können.

Die Tischplatte wird man vorteilhaft entsprechend einem vorgegebenen Schnittprogramm automatisch in ihre beiden Gebrauchsstellungen steuern.

Entsprechende Antriebsvorrichtungen hierfür können dabei vielgestaltig ausgelegt sein. So kann bspw. jeder Führungsvorrichtung ein elektrischer Getriebemotor zugeordnet sein, der ein Ritzel antreibt, das mit einer an der Tischplatte fest montierten Zahnstange kämmt. Bevorzugt wird man eine druckmediumgesteuerte Antriebsvorrichtung vorsehen, wobei Lösungen denkbar sind, die in Verbindung mit entsprechend geführten Seilzügen mit lediglich einem, bspw. druckluftbetätigten Zylinderaggregat oder mit zwei, in ihrer Wirkungsweise miteinander korrespondierende Zylinderaggregate auskommen.

Eine technisch elegante und funktionsmäßig zuverlässige Lösung mit solchen Linearantrieben sieht dabei zwei horizontale Bandzylinder vor, die sich zu jeweils einer der beiden Führungsvorrichtungen parallel erstrecken und deren druckluftgesteuertes Antriebsglied mit jeweils einem der geführten Eckbereiche der Tischplatte schwenkbeweglich verbunden sind.

Hierbei können die Bandzylinder selbst auch zugleich die Führungsvorrichtungen bilden.

In der Zeichnung ist ein Ausführungsbeispiel der Erfindung stark schematisiert dargestellt. Es zeigen:
- Figur 1: eine Draufsicht auf einen, hinter einer Trennsäge angeordneten Auflagetisch, dessen Tischplatte in verschiedenen Schwenkstellungen dargestellt ist;
- Figur 2: eine Seitenansicht eines ersten Ausführungsbeispieles einer Tischplattenstütze; und
- Figur 3: eine Seitenansicht eines zweiten Ausführungsbeispieles einer Tischplattenstütze.

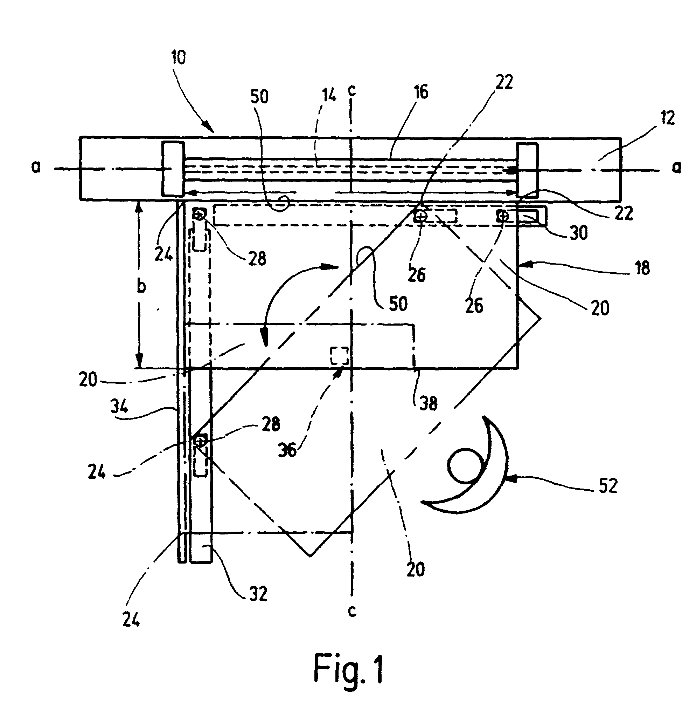

In Figur 1 ist eine an sich bekannte Trennsäge als Ganzes mit 10 bezeichnet. Sie ist als unter Tisch arbeitende Kreissäge ausgebildet. Das Bezugszeichen 12 bezeichnet einen horizontalen Maschinentisch, der in seiner Längsmitte von einem Sägeschlitz 14 durchsetzt ist, aus dem Kreissägeblätter eines Sägeaggregates zum Vorritzen und Durchtrennen von Plattenmaterial auftauchen.

Die den Sägeschlitz 14 enthaltende, vertikale Trennebene ist mit a-a bezeichnet. Oberhalb des Sägeschlitzes 14 befindet sich ein anheb- und absenkbarer Druckbalken 16 zum Festlegen des plattenförmigen Schneidgutes während eines Trennschnittes.

Vor und hinter dem Maschinentisch 12 sind diesem rechteckförmige Auflagetische zugeordnet. Sie dienen zur Bereitstellung von aufzuteilendem Plattenmaterial bzw. zur Übernahme von aufgeteiltem Plattenmaterial.

In Figur 1 ist einfachheitshalber lediglich der als Ganzes mit 18 bezeichnete und hinter der Trennsäge 10 vorgesehene Auflagetisch dargestellt, dessen Tischplatte 20 eine Länge 1 hat, die der Länge des maximal durchführbaren Trennschnittes entspricht. Die Tischplattenbreite b entspricht vorzugsweise im wesentlichen der halben Länge des maximal durchführenbaren Trennschnittes.

Die Tischplatte 20 ist, wie strichpunktiert angedeutet, um 90° verschwenkbar an den Maschinentisch 12 anstellbar, um bspw. der Trennsäge 10 Plattenmaterial, das nach einem ersten Maschinendurchlauf in Längsstreifen aufgeteilt worden ist, anschließend der Trennsäge 10 wieder derart zuführen lässt, daß es in der Folge nochmals in Querrichtung aufgeteilt werden kann. Diese Maßnahme ist in der Sägetechnik bekannt. Im vorliegenden Falle interessiert deshalb lediglich, auf welche Art und Weise die Tischplatte 20 in Bezug auf die Trennebene a-a in zueinander um 90° geänderte Positionen einstellbar ist.

Die Tischplatte 20 ist hierzu im Bereich ihrer beiden, deren Plattenlänge 1 begrenzenden Plattenecken 22, 24 schwenkbeweglich mit jeweils einem diese zugleich tragenden Mitnehmer 26 bzw. 28 einer unterhalb derselben stationär angeordneten Führungsvorrichtung 30 bzw. 32 verbunden.

Die Führungsvorrichtung 30 erstreckt sich hierbei horizontal und parallel zur Trennebene a-a, während die horizontale Führungsvorrichtung 32 zu dieser horizontal und senkrecht angeordnet ist. Beide Führungsvorrichtungen 30, 32 sind jeweils vorzugsweise durch einen bspw. von der Firma Festo AG, Esslingen gefertigten, druckluftbetätigten Bandzylinder gebildet, deren Mitnehmer 26 bzw. 28 mit dem Zylinderkolben eine Baueinheit bilden. Der Führungsvorrichtung 32 ist vorzugsweise noch ein horizontal angeordneter, sich zu dieser parallel bzw. zur Trennebene a-a senkrecht erstreckender Winkelanschlag 34 zugeordnet.

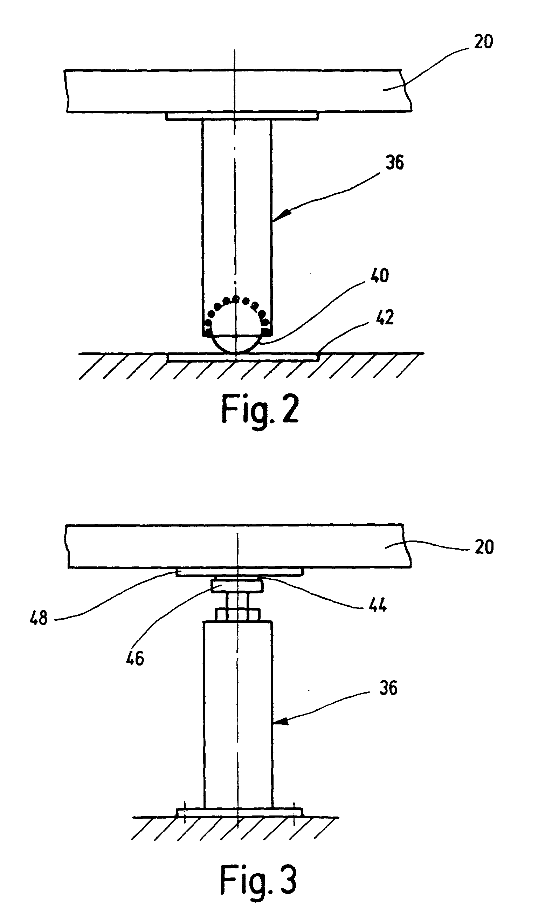

Das Bezugszeichen 36 bezeichnet eine säulenartige Stütze, die die Tischplatte 20 im Bereich der freien Plattenlängsseite 38 und der Plattenquermittenebene c-c auf dem Boden abstützt. Gemäß Figur 2 kann dabei die Stütze 36 an der Unterseite der Tischplatte 20 befestigt sein und vorzugsweise mittels einer sog. Allseitrolle 40 auf einer ebenerdigen Laufplatte 42 abrollen oder die Stütze 36 kann, gemäß Figur 3, im Boden verankert sein und mit einem oberen, z.B. mit einem Gleitbelag 44 beschichteten Gleitelement 46 an einer an der Tischplatte 20 unterseitig vorgesehenen Gleitplatte 48 anliegen. Die Stütze 36 ist vorzugsweise längenveränderlich ausgebildet, um die Tischplatte 20 in die Horizontale bringen zu können.

In Figur 1 erstreckt sich die Tischplatte 20 z.B. in Längsrichtung parallel zur Trennebene a-a. In dieser Einstellung kann in Längsstreifen aufgeteiltes Plattenmaterial auf der Tischplatte 20 abgelegt werden. Soll dieses streifenförmige Plattenmaterial anschließend noch in Querrichtung aufgeteilt werden, so ist die Tischplatte 20, nachdem eine Charge von Plattenlängsstreifen auf diese aufgeschoben worden ist, um 90° zu verschwenken, damit sich die Plattenlängsstreifen zur späteren Queraufteilung quer zur Trennebene a-a erstrecken. Hierzu wird zunächst der Bandzylinder 32 angesteuert, der über seinen Mitnehmer 28 das Platteneck 24 der Tischplatte 20 senkrecht und entgegengesetzt zur Trennebene a-a horizontal wegbewegt.

Ist der Mitnehmer 28, mit Bezug auf Bandzylinder 30, aus der in Figur 1 gezeigten, anfänglichen Totpunktlage herausbewegt, wird auch Bandzylinder 30 angesteuert, so daß beide Bandzylinder 30 und 32 nunmehr synchron ihren Mitnehmer 26 bzw. 28 in ihre gegenüberliegende Endstellung bewegen. Dabei wandert das Platteneck 22 der Tischplatte 20 in die Ausgangsposition des Platteneckes 24, das seinerseits solange parallel zum Winkelanschlag 34 verstellt wird, bis die ursprünglich dem Maschinentisch 12 benachbarte Längskante 50 der Tischplatte 20 parallel zum Winkelanschlag 34 ausgerichtet ist. Während dieser Schwenkbewegung der Tischplatte 20 verlagert sich die Allseitrolle 40 der Stütze 36 gemäß Figur 2 auf der Laufplatte 42 entlang einer relativ engen Ellipsenbahn, während im Falle der bodenfesten Stütze 36, gemäß Figur 3, die Tischplatte 20 über ihre Gleitplatte 48 relativ zum Gleitbelag 44 des Gleitelementes 46 entsprechend verschoben wird.

Wie Figur 1 zeigt, kann die Bedienperson 52 während der Tischplattenschwenkbewegung ihren Standort im wesentlichen beibehalten und der nahe der Tischplattenlängskante zuletzt abgelegte Plattenlängsstreifen gelangt in der Schwenkendlage der Tischplatte 20 unmittelbar neben den Windelanschlag 34.

Wie in Figur 1 strichpunktiert angedeutet, kann die Tischplatte 20 an ihrer von der Trennsäge 10 abgekehrten, freien Längsseite 38 zumindest über einen Teil ihrer Länge abklappbar ausgebildet sein. Das entsprechende Plattenteilstück ist mit 20' bezeichnet und erlaubt es, für bestimmte Aufteiloperationen die Tiefe der Tischplatte 20 entsprechend zu verringern, so daß sich die Bedienperson näher bei der Trennsäge 10 aufzustellen vermag.

Erstreckt sich das abklappbare Tischplattenteilstück 20' lediglich über einen Teil ihrer Länge, so ist dessen Anordnung zweckmäßig so getroffen, daß in der gezeigten Ausgangsstellung der Tischplatte 20 die Breite des dem Winkelanschlag 34 benachbarten Plattenstirnendes entsprechend verringert wird.

Im Falle einer in dieser Weise ausgebildeten Tischplatte 20 ist die Stütze 36 im Bereich der Plattenquerebene c-c neben dem abklappbaren Plattenteilstück 20' zu positionieren.

Der Auflagetisch 18 ist vorzugsweise als Luftkissentisch ausgebildet.

## Patentansprüche

1. Trennsäge (10) mit einem an deren Maschinentisch (12) anschließenden Auflagetisch (18), , dessen Tischplatte (20) eine Rechteckform aufweist und horizontal verschwenkbar, sowie wechselseitig mit zwei ihrer Seiten an den Maschinentisch (12) anstellbar ist, wobei die Länge (1) der Tischplatte (20) wenigstens der Länge des maximal durchführbaren Trennschnittes entspricht, und die Tischplatte (20) mit zwei benachbarten Eckbereichen (22,24) an einander rechtwinklig zugeordneten, horizontalen Führungsvorrichtungen (30,32) gleicher Länge geführt ist, von denen sich die eine parallel zur Trennebene (a-a) erstreckt und die von den geführten Eckbereichen (22,24) abgewandte Seite der Tischplatte (20) durch eine Stütze (36) bodenseitig abgestützt ist, **dadurch gekennzeichnet, daß** die Tischplatte (20) mit zwei ihre Länge begrenzenden Eckbereichen (22,24) an den Führungsvorrichtungen (30,32) geführt ist, deren Länge jeweils im wesentlichen der maximalen Schnittlänge der Trennsäge (10) entspricht und daß die Stütze (36) im Bereich der Quermittenebene (c-c) der Tischplatte (20) und im Abstand von der parallel zur Trennebene (a-a) verlaufenden Führungsvorrichtung (30) vorgesehen ist.

2. Trennsäge nach Anspruch 1, **dadurch gekennzeichnet, daß** die Stütze (36) am Boden stationär angeordnet ist, und die Tischplatte (20) auf der Stütze (36) verschiebbar aufruht.

3. Trennsäge nach Anspruch 1, **dadurch gekennzeichnet, daß** die Stütze (36) an der Unterseite der Tischplatte (20) befestigt ist und mit einer frei drehbaren Stützrolle (40) auf einer ebenerdigen Laufplatte (42) abgestützt ist.

4. Trennsäge nach Anspruch 3, **dadurch gekennzeichnet, daß** als Stützrolle (40) eine im unteren Stützenende gelagerte Allseitrolle vorgesehen ist.

5. Trennsäge nach einem der vorhergehenden Ansprüche, **dadurch gekennzeichnet, daß** der sich senkrecht zur Trennebene (a-a) erstreckenden Führungsvorrichtung (32) ein zu dieser parallel angeordneter Winkelanschlag (34) zugeordnet ist.

6. Trennsäge nach einem der vorhergehenden Ansprüche, **dadurch gekennzeichnet, daß** die Tischplatte (20) an ihrer, von der Trennsäge (10) abgekehrten freien Längsseite (38) zumindest über einen Teil ihrer Länge derart abklappbar ist, daß die Breite des bei entsprechender Tischplatteneinstellung dem Winkelanschlag (34) benachbarten Stirnendes der Tischplatte (20) verringert ist.

7. Trennsäge nach einem der vorhergehenden Ansprüche, **dadurch gekennzeichnet, daß** die Tischplatte (20) mittels einer unter Tisch angeordneten Antriebsvorrichtung programmgesteuert verschwenkbar ist.

8. Trennsäge nach Anspruch 7, **dadurch gekennzeichnet, daß** die Antriebsvorrichtung mindestens einen Linearantrieb aufweist.

9. Trennsäge nach Anspruch 8, **dadurch gekennzeichnet, daß** der Linearantrieb druckmediumgesteuert ist.

10. Trennsäge nach Anspruch 8 oder 9, **dadurch gekennzeichnet, daß** die Antriebsvorrichtung zwei Bandzylinder (30,32) aufweist, die jeweils eine der Führungsvorrichtungen (30,32) bilden, wobei deren druckmediumgesteuertes Antriebsglied (26 bzw. 28) mit jeweils einem der geführten Platteneckbereiche (22,24) der Tischplatte (20) schwenkbeweglich verbunden ist.

## Claims

1. Cutting saw (10) with a supporting table (18) adjoining its machine table (12), whose table plate (20) has a rectangular form and is capable of horizontally swivelling, and is adjustable alternatingly with two of its sides to the machine table (12), where the length (1) of the table plate (20) corresponds at least to the length of the maximum performable cutting section, and the table plate (20) is conducted with two neighbouring corner areas (22, 24) to horizontal guiding devices (30, 32) having the same length and arranged to each other in rectangular form, of which one is parallel to the separating plane (a-a) and the side of the table plate (20) facing away, which is guided by the corner areas (22, 24), is supported by a supporting element (36) on the bottom side, **wherein** the table plate (20) is supported with two corner areas (22, 24), limiting its length, at the guiding devices (30, 32), whose length in each case corresponds mainly to the maximum cutting length of the cutting saw (10), and the support (36) is envisaged in the zone of the transverse central plane (c-c) of the table plate (20) and at a clearance from the guiding device (30) running parallel to the separating plane (a-a).

2. Cutting saw according to Claim 1, **wherein** the supporting element (36) is arranged on the ground in a stationary manner, and the table plate (20) rests on the supporting element (36) with a sliding capability.

3. Cutting saw according to Claim 1, **wherein** the supporting element (36) is secured at the lower side of the table plate (20) and is supported by a trunnion-mounted supporting roller (40) on a travelling plate (42), flushing with the ground.

4. Cutting saw according to Claim 3, **wherein** a universal roller mounted in the lower supporting end is envisaged as a supporting roller (40).

5. Cutting saw according to one of the previous claims, **wherein**, to the guide device (32) running vertically to the separating plane (a-a), an angle stop (34) arranged in parallel to this is allocated.

6. Cutting saw according to one of the previous claims, **wherein** the table plate (20) is tiltable on its free longitudinal side facing away from the cutting saw (10) at least over part of its length, and being tiltable in such a way that the width, with corresponding table plate setting, of the facial end of the table plate (20) adjacent to the angle stop (34) is reduced.

7. Cutting saw according to one of the previous claims, **wherein** the table plate (20) has a program-controlled tilting mode by means of a drive unit arranged underneath the table.

8. Cutting saw according to Claim 7, **wherein** the drive unit has at least one linear drive.

9. Cutting saw according to Claim 8, **wherein** the linear drive is pressure-medium controlled.

10. Cutting saw according to Claim 8 or 9, **wherein** the drive unit has two belt cylinders (30, 32) which form in each case one of the guiding devices (30, 32) where their pressure-medium controlled driving element (26 and 28, respectively) is tilting-moveably joined to one of the guided plate corner areas (22, 24), in each case, of the table plate (20).

## Revendications

1. Machine de sciage (10) avec, raccordée à sa table de machine (12), une table de support (18) dont le plateau de table (20) présente une forme rectangulaire et peut être pivoté horizontalement ainsi que mis en place contre la table de machine (12) avec alternativement deux de ses côtés, la longueur (1) du plateau de table (20) correspondant au moins à la longueur de la coupe maximale réalisable et le plateau de table (20) étant guidé avec deux zones d'angle voisines (22, 24) contre des dispositifs de guidage (30, 32) horizontaux de même longueur, disposés perpendiculairement l'un à l'autre, dont l'un s'étend parallèlement au plan de coupe (a-a), et le côté du plateau de table (20) opposé aux zones d'angle guidées (22, 24) étant supporté au sol par un support (36),
**caractérisée en ce que** le plateau de table (20) est guidé avec deux zones d'angle (22, 24) délimitant sa longueur contre les dispositifs de guidage (30, 32) dont la longueur correspond respectivement essentiellement à la longueur de coupe maximale de la machine de sciage (10) et **en ce que** le support (36) est prévu dans la zone du plan médian transversal (c-c) du plateau de table (20) et à distance du dispositif de guidage (30) parallèle au plan de coupe (a-a).

2. Machine de sciage selon la revendication 1,
**caractérisée en ce que** le support (36) est agencé de façon fixe sur le sol et le plateau de table (20) repose de façon mobile sur le support (36).

3. Machine de sciage selon la revendication 1,
**caractérisée en ce que** le support (36) est fixé sur le dessous du plateau de table (20) et est appuyé à l'aide d'un galet de support (40) à rotation libre sur une plaque de roulement (42) au niveau du sol.

4. Machine de sciage selon la revendication 3,
**caractérisée en ce qu'**il est prévu comme galet de support (40) un galet polydirectionnel monté dans l'extrémité inférieure de support.

5. Machine de sciage selon l'une des revendications précédentes,
**caractérisée en ce qu'**il est associé au dispositif de guidage (32) s'étendant perpendiculairement au plan de coupe (a-a) une butée angulaire (34) agencée parallèlement à celui-ci.

6. Machine de sciage selon l'une des revendications précédentes,
**caractérisée en ce que** le plateau de table (20), au niveau de son côté longitudinal (38) libre opposé à la machine de sciage (10), peut être rabattu au moins sur une partie de sa longueur de manière à réduire la largeur de l'extrémité frontale du plateau de table (20), adjacente à la butée angulaire (34) lors du réglage de plateau de table correspondant.

7. Machine de sciage selon l'une des revendications précédentes,
**caractérisée en ce que** le plateau de table (20) peut être pivoté par commande à programme au moyen d'un dispositif d'entraînement agencé sous la table.

8. Machine de sciage selon la revendication 7,
**caractérisée en ce que** le dispositif d'entraînement présente au moins un entraînement linéaire.

9. Machine de sciage selon la revendication 8,
**caractérisée en ce que** l'entraînement linéaire est commandé par fluide comprimé.

10. Machine de sciage selon la revendication 8 ou 9,
**caractérisée en ce que** le dispositif d'entraînement présente deux vérins à bande (30, 32) qui forment chacun l'un des dispositifs de guidage (30, 32), leur élément d'entraînement (26 ou 28) commandé par fluide comprimé étant à chaque fois relié de façon pivotante à l'une des zones d'angle guidées (22, 24) du plateau de table (20).
